# EUROPÄISCHE PATENTSCHRIFT

(11) **EP 2 898 022 B1**
(45) Veröffentlichungstag und Bekanntmachung des Hinweises auf die Patenterteilung: **20.03.2019**
(21) Anmeldenummer: 13765713.6
(22) Anmeldetag: 19.09.2013
(51) Int. Cl.: C09C 1/30, C04B 26/14, C04B 14/06, C04B 24/42, C04B 26/18, C04B 26/10

(54) **VERWENDUNG OBERFLÄCHENFUNKTIONALISIERTER KIESELSÄUREN ALS ADDITIV ZUR ERHÖHUNG DER LAGERSTABILITÄT VON REAKTIONSHARZ-ZUSAMMENSETZUNGEN**
USE OF SURFACE-FUNCTIONALISED SILICIC ACIDS AS ADDITIVE TO IMPROVE THE STORAGE STABILITY OF REACTION RESIN COMPOSITIONS
UTILISATION D'ACIDES SILICIQUES FONCTIONNALISÉS EN SURFACE COMME ADDITIFS POUR AMÉLIORER LA STABILITÉ AU STOCKAGE DES COMPOSITIONS DE RÉSINES RÉACTIVES

(30) Priorität: 21.09.2012 DE 102012216972
(43) Veröffentlichungstag der Anmeldung: 29.07.2015
(73) Patentinhaber: Hilti Aktiengesellschaft, 9494 Schaan (LI)
(72) Erfinder: PFEIL, Armin, 86916 Kaufering (DE); KUMRU, Memet-Emin, 86199 Augsburg (DE)
(86) Internationale Anmeldenummer: PCT/EP2013/069422
(87) Internationale Veröffentlichungsnummer: WO 2014/044731

(56) Entgegenhaltungen:
- EP-A1- 2 357 162
- WO-A1-2011/072789
- DE-A1-102006 048 509

## Beschreibung

Die Erfindung betrifft die Verwendung oberflächenfunktionalisierter Kieselsäuren als Additiv zur Erhöhung der Lagerstabilität der Komponenten ein- oder mehrkomponentiger anorganisch gefüllter Reaktionsharz-Zusammensetzungen, die insbesondere zur Herstellung von Reaktionsharzmörteln verwendet werden können.
Anorganisch gefüllte Reaktionsharz-Zusammensetzungen sind für zahlreiche Anwendungen, insbesondere für bautechnische Anwendungen bekannt, wie Kleben, Abdichten, Beschichten und zur Befestigung von Verankerungsmitteln und dergleichen. Derartige Reaktionsharz-Zusammensetzung sind beispielsweise in der DE 39 40 309 A1, der DE 4 231 161 A1, der und EP 2 357 162 A1 beschrieben.
Die Harzkomponente enthält zur Einstellung der Viskosität sowie der gewünschten Produkteigenschaften gewöhnlich Reaktivverdünner, d.h. niedrigviskose Verbindungen, wie Monomere oder Oligomere, die an der Härtungsreaktion des Harzes teilnehmen können und in das Harz eingebaut werden. Die Härterkomponente enthält je nach Härtungssystem einen Radikalinitiator und ggf. ein Phlegmatisierungsmittel hierfür als Härtungsmittel für radikalisch härtbare Harze oder Amine als Härtungsmittel für beispielsweise Epoxidharze und häufig auch Lösungsmittel zur Einstellung der Viskosität der Komponenten.

Unter anderem zur Einstellung des erforderlichen Mischungsverhältnisses bei mehrkomponentigen Systemen und/oder als Füllstoffe enthalten die Reaktionsharz-Zusammensetzungen anorganische Zuschläge, insbesondere mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein. Daneben enthalten die Zusammensetzungen oft noch hydraulisch abbindende Zuschläge, wie Gips, Branntkalk oder Zement, z. B. Tonerd- oder Portlandzement, wie beispielsweise in der DE 4 231 161 A1 beschrieben.

Nachteilig an den bekannten Systemen ist, dass durch die Reaktivverdünner, die (inerten) Lösungsmittel oder die Amine Übergangsmetallverbindungen, wie z.B. Eisen-, Aluminium-, Kupfer- und Manganverbindungen, insbesondere Oxide, welche als Verunreinigungen in den anorganischen Füllstoffen enthalten sind, aus diesen herausgelöst werden können. Dies tritt insbesondere bei solchen Verbindungen, die Metallverbindungen komplexieren können, auf, wie beispielsweise 2-Methyl-1,5-pentandiamin oder 2-(Acetoacetoxy)-ethylmethacrylat. Die herausgelösten Metallverbindungen destabilisieren die als Härter für radikalisch basierte Systeme eingesetzten Peroxide, so dass die Lagerstabilität der Peroxid enthaltenden Komponente beeinträchtig wird. Aber auch die Lagerstabilität der Harzkomponente, unabhängig davon, ob es sich um radikalisch härtbare Systeme oder Systeme auf Epoxidbasis handelt, kann durch die freigesetzten Metalle oder Metallverbindungen beeinträchtigt werden und abnehmen.

Dementsprechend musste bisher darauf geachtet werden, dass die verwendeten Füllstoffe und Additive möglichst geringe Spuren an Metallverbindungen aufweisen, was den Einsatz von Füllstoffen oder Additiven mit hohem Reinheitsgrad erforderlich machte, um die gewünschte Lagerstabilität der Komponenten zu erreichen.

Aufgabe der Erfindung ist daher die Bereitstellung von lagerstabilen, anorganisch gefüllten Harz- und/oder Härterkomponenten, die insbesondere auch bei Verwendung von Füllstoffen und Additiven, welche einen erhöhten Gehalt an Metallspuren aufweisen, wie solche mit technischem Reinheitsgrad, lagerstabil und daher wirtschaftlicher in der Herstellung sind. Im Sinne der Erfindung soll der Ausdruck *"Übergangsmetallverbindung(en)"* Verbindungen von Übergangsmetallen, d.h. chemischen Elemente mit den Ordnungszahlen von 21 bis 30, 39 bis 48, 57 bis 80 und 89 bis 112, wie Metallkomplexe, Metallsalze, Metalloxide, Metallsulfide und dergleichen umfassen.

Die Aufgabe wird durch die Verwendung einer oberflächenfunktionalisierten Kieselsäure als Additiv für die Harz- und/oder Härterkomponente einer mehrkomponentigen Reaktionsharz-Zusammensetzung gelöst, wobei die Kieselsäure an ihrer Oberfläche organische mehrzähnige Liganden trägt, die mit Metallverbindungen einen Chelat-Komplex bilden können. Eine derartige Kieselsäure ist in der DE 10 2006 048 509 A1 beschrieben, wobei als Oberflächenmodifizierungsmittel N-haltige Siliziumverbindungen verwendet werden. Die Kieselsäure wird als Additiv für Harze wie Epoxidharze verwendet, insbesondere für Klebstoffe.

Unter *"Additiv"* im Sinne der Erfindung sind Stoffe oder Verbindungen zu verstehen, die Produkten (hier: Harz- und/oder Härterkomponente) in geringen Mengen zugesetzt werden, um bestimmte Eigenschaften der Produkte zu erreichen oder zu verbessern, insbesondere um einen positiven Effekt, wie die Lagerstabilität, vor der Gebrauchphase zu erreichen. *"Oberflächenfunktionalisiert"* im Sinne der Erfindung bedeutet, dass die chemische Struktur an der Oberfläche von ihrem ursprünglichen Zustand verändert worden ist.

Die Erfinder haben herausgefunden, dass die Lagerstabilität einer Härterkomponente welche ein aliphatisches Diamin und/oder ein Peroxid enthält, wie die eines Hybridbindemittels mit dem Diamin als Härtungsmittel für eine Epoxidverbindung und dem Peroxid als Härtungsmittel für eine radikalisch härtbare Verbindung, wie sie in der EP 2 357 162 A1 beschrieben ist, deutlich erhöht werden kann, wenn der Zusammensetzung eine oberflächenfunktionalisierte Kieselsäure, deren Oberfläche so funktionalisiert wurde, dass ihrer Oberfläche organische mehrzähnige Liganden trägt, die mit Metallverbindungen einen Chelat-Komplex bilden können, zugegeben wird. Dies wird beobachtet, selbst wenn Füllstoffe und mineralische Additive mit technischem Reinheitsgrad verwendet werden. Dabei reicht bereits eine geringe Menge der oberflächenfunktionalisierten Kieselsäure aus.

Diese oberflächenfunktionalisierte Kieselsäure hat den Vorteil, dass die durch die Reaktivverdünner, die (inerten) Lösungsmittel oder die Amine herausgelösten Metalle oder Metallverbindungen mit den an die Kieselsäure angehängten Liganden stabile Komplexe bilden, so dass eine Destabilisierung der Harze oder der Radikalinitiatoren verhindert wird. Dabei müssen die mit den Liganden der oberflächenfunktionalisierten Kieselsäure gebildeten Chelatkomplexe stabiler sein, verglichen mit den den Verbindungen bzw. Komplexen, die mit den Reaktivverdünnern, (inerten) Lösungsmitteln und/oder den als Härter verwendeten Aminen gebildet werden. Ein weiterer Vorteil der Erfindung liegt darin, dass die oberflächenfunktionalisierten Kieselsäuren entsprechend den häufig eingesetzten pyrogenen Kieselsäuren ein inerter Füllstoff sind und daher nicht abgetrennt werden müssen. Sie dienen neben ihrer Funktion als Metallfänger als Füllstoffe, ohne einen negativen Einfluss auf die Eigenschaften der Reaktionsharz-Zusammensetzung zu haben. Sie tragen vielmehr zur Einstellung der rheologischen Eigenschaften der Komponenten bei.

Dadurch können Füllstoffe und/oder mineralische Additive, welche Übergangsmetallverbindungen enthalten, mit geringerem Reinheitsgrad eingesetzt werden, wie etwa solche mit technischem Reinheitsgrad, ohne die Formulierung der Reaktionsharz-Zusammensetzung ändern zu müssen, was deren Herstellung vereinfacht und wirtschaftlicher macht.

Geeignete oberflächenmodizierte Kieselsäuren als Übergangsmetallfänger tragen an ihrer Oberfläche organische Reste, die als mehrzähnige Liganden fungieren und mit den Metallverbindungen einen stabilen Chelatkomplex bilden. Genauer ist die oberflächenfunktionalisierte Kieselsäure eine Verbindung der allgemeinen Formel (I)

[O_{4/2}Si]ₐ[O_{3/2}SiCH₂(CR³R⁴)ₘX]_{b}[O_{3/2}SiCH₂(CR³R⁴)ₙY]_{c}[O_{3/2}SiV]_{d} (I),

worin X unter NRR², NR[(CH₂)ₚNR¹]ᵢR², SR, S(CH₂)ₑSR, S(CH₂)_{f}U, S[(CH₂)ⱼS]ₜR, S[(CH₂)ₑS]ₜ(CH₂)ₛZ, NRC(S)NR¹H, SCH₂CH(NHR)CO₂E, SCH₂CH(CO₂E)CH₂CO₂E, S(CH₂)ₗOR, S(CH₂)ᵤC(O)W, S(CH₂)ⱼNRC(S)NR¹H und OCH₂CH(OH)CH₂NR[(CH₂)ₚNR¹]ᵢR³, worin U einen heteroaromatischen Ring darstellt, Z SiO_{3/2} oder einen heteroaromatischen Ring darstellt, E Wasserstoff, C₁-C₁₀-Alkyl oder ein Metallion M darstellt und W OH, OR, OM oder NR[(CH₂)ₚNR¹]ᵢR² darstellt, ausgewählt ist.

Wenn c größer als 0 ist, ist Y unter NRR², NR[(CH₂)ₚNR¹]ᵢR², SR, S(CH₂)ₑSR, S(CH₂)_{f}U, S[(CH₂)ⱼS]ₜR oder S[(CH₂)ₑS]ₜ(CH₂)ₛZ ausgewählt.

R, R¹, R³ und R⁴ sind unabhängig voneinander unter Wasserstoff, C₁-C₂₂-Alkyl, C₁-C₂₂-Aryl und C₁-C₂₂-Alkylaryl ausgewählt. R² ist unter Wasserstoff, C₁-C₂₂-Alkyl oder C₂-C₁₀-Alkyl-Si(O)_{3/2} ausgewählt.

l, s, t und u stellen unabhängig voneinander ganze Zahlen von 1 bis 100 dar, i stellt eine ganze Zahl von 1 bis 10.000 dar; m und n stellen unabhängig voneinander eine ganze Zahl von 1 bis 100 dar und e, f, j und p stellen unabhängig voneinander eine ganze Zahl von 2 bis 20 dar.

V stellt eine gegebenenfalls substituierte Gruppe dar, die unter C₁-C₂₂-Alkyl, C₂-C₂₂-Alkenyl, C₂-C₂₂-Alkinyl, Aryl, C₁-C₂₂-Alkylaryl, C₁-C₂₂-Alkyl, das mit einem Sulfid, Sulfoxid, Sulfon, Amin, Polyalkylamin, Phosphin oder anderen Phosphor-haltigen Gruppen substituiert ist oder diese Gruppen als Teil der Kohlenwasserstoffkette enthält, ausgewählt ist.

Die freien Valenzen der Sauerstoffatome des Silikats sind durch eine oder mehrere Gruppen gesättigt, die unter einem Siliziumatom von anderen Verbindungen der allgemeinen Formel (I), Wasserstoff, einer linearen oder verzweigten C₁-C₂₂-Alkylgruppe, einer Endgruppe R⁵₃M¹O_{1/2}, einem vernetzenden Brückenmitglied oder einer Kette R⁵_{q}M¹(OR⁶)_{g}O_{k/2} oder Al(OR⁶)₃₋ₕO_{h/2} oder R⁵Al(OR⁶)₂₋ᵣO_{r/2}, worin M¹ Si oder Ti darstellt, ausgewählt sind, wobei R⁵ und R⁶ unabhängig voneinander unter einer linearen oder verzweigten C₁-C₂₂-Alkylguppe, Arylgruppe und C₁-C₂₂-Alkylarylgruppe ausgewählt sind. k stellt eine ganze Zahl von 1 bis 3 dar, q stellt 1 oder 2 dar und g stellt eine ganze Zahl von 0 bis 2 dar, wobei g + k + q 4 ist, h stellt eine ganze Zahl von 1 bis 3 dar und r stellt 1 oder 2 dar. Die freien Valenzen können auch durch ein Oxometall-Bindungssystem gesättigt sind, wobei das Metall Zirkonium, Bor, Magnesium, Eisen, Nickel oder ein Lanthanid ist, ausgewählt sind.

a, b, c und d stellen ganze Zahlen dar, so dass das Verhältnis b:a zwischen 0,00001 und 100.000 liegt und a und b immer größer als 0 sind. Ist c größer als 0, liegt das Verhältnis c:a+b zwischen 0,00001 und 100.000 liegt. Ist d größer als Null, liegt das Verhältnis d:a+b zwischen 0,00001 und 100.000.

Wird eine Endgruppe und/oder vernetzende Gruppe oder eine Polymerkette verwendet, liegt bevorzugt das Verhältnis der Endgruppe, des Vernetzungsmittels oder der Polymerketten zu a+b+c+d zwischen 0 und 999:1, bevorzugt zwischen 0,001 und 999:1 und besonders bevorzugt zwischen 0,01 und 99:1.

Bevorzugte Verbindungen der allgemeinen Formel (I) sind solche, worin X unter NRR², NR[(CH₂)ₚNR¹]ᵢR², SR, S(CH₂)ₑSR, S[(CH₂)ᵢS]ₜR, S[(CH₂)ₑS]ₜ(CH₂)ₛZ, NRC(S)NR¹H, S(CH₂)ᵤC(O)W, S(CH₂)ⱼNRC(S)NR¹H und OCH₂CH(OH)CH₂NR[(CH₂)ₚNR¹]ᵢR³ worin Z SiO_{3/2} oder einen heteroaromatischen Ring darstellt, und W NR[(CH₂)ₚNR¹]ᵢR² darstellt, ausgewählt ist.

In einer bevorzugten Ausführungsform ist, wenn c größer als 0 ist, Y unter NRR², NR[(CH₂)ₚNR¹]ᵢR², SR, S(CH₂)ₑSR, S[(CH₂)ⱼS]ₜR oder S[(CH₂)ₑS]ₜ(CH₂)ₛZ ausgewählt, wobei R und R¹ unabhängig voneinander unter Wasserstoff, C₁-C₁₀-Alkyl, C₁-C₂₂-Aryl und C₁-C₂₂-Alkylaryl ausgewählt sind. R² ist unter Wasserstoff, C₁-C₂₂-Alkyl oder C₂-C₁₀-Alkyl-Si(O)_{3/2} ausgewählt und R³ und R⁴ stellen Wasserstoff dar. s, t und u stellen unabhängig voneinander ganze Zahlen von 1 bis 20 dar, i stellt eine ganze Zahl von 1 bis 10.000 dar, m und n stellen unabhängig voneinander eine ganze Zahl von 1 bis 10 dar und e, j und p stellen unabhängig voneinander eine ganze Zahl von 2 bis 20 dar.

Bevorzugt stellt V eine gegebenenfalls substituierte Gruppe dar, die unter C₁-C₂₂-Alkyl, C₂-C₂₂-Alkenyl, C₂-C₂₂-Alkinyl, Aryl, C₁-C₂₂-Alkylaryl, C₁-C₂₂-Alkyl, das mit einem Sulfid, Sulfoxid, Sulfon, Amin oder Polyalkylamin substituiert ist oder diese Gruppen als Teil der Kohlenwasserstoffkette enthält, ausgewählt ist.

Bevorzugt sind die freien Valenzen der Sauerstoffatome des Silikats durch eine oder mehrere Gruppen gesättigt, die unter einem Siliziumatom einer der anderen Verbindungen der allgemeinen Formel (I), Wasserstoff, einer linearen oder verzweigten C₁-C₁₀-Alkylgruppe und einer Endgruppe R⁵₃M¹O_{1/2}, eines vernetzenden Brückenmitglieds oder einer Kette R⁵_{q}M¹(OR⁶)_{g}O_{k/2} oder Al(OR⁶)₃₋ₕO_{h/2} oder R⁵Al(OR⁶)₂₋ᵣO_{r/2} ausgewählt sind, worin M¹ Si oder Ti darstellt, ausgewählt sind, und worin R⁵ und R⁶ unabhängig voneinander unter einer linearen oder verzweigten C₁-C₁₂-Alkylguppe, Arylgruppe und C₁-C₁₀-Alkylarylgruppe ausgewählt sind. k stellt eine ganze Zahl von 1 bis 3 dar, q stellt 1 oder 2 dar und g stellt eine ganze Zahl von 0 bis 2 dar, wobei g + k + q 4 ist, h stellt eine ganze Zahl von 1 bis 3 dar und r stellt 1 oder 2 dar. Die freien Valenzen können auch durch ein Oxometall-Bindungssystem gesättigt sind, wobei das Metall Zirkonium, Bor, Magnesium, Eisen, Nickel oder ein Lanthanid ist.

Bevorzugt stellen a, b, c und d ganze Zahlen dar, so dass das Verhältnis b:a zwischen 0.00001 und 100 beträgt und a und b immer größer als 0 sind. Ist c größer als 0, liegt das Verhältnis c:a+b zwischen 0,00001 und 100. Ist d größer als Null, liegt das Verhältnis von d:a+b zwischen 0,00001 und 100.

In einer besonders bevorzugten Ausführungsform enthält die oberflächenfunktionalisierte Kieselsäure in Kombination zwei oder mehrere dieser bevorzugten Merkmale.

Wird eine Endgruppe und/oder ein Vernetzungsmittel oder eine Polymerkette verwendet, liegt das Verhältnis der Endgruppe, des Vernetzungsmittels oder der Polymerketten zu a+b+c+d zwischen 0 und 999:1, bevorzugt zwischen 0,001 und 999:1 und besonders bevorzugt zwischen 0,01 und 99:1.

Besonders bevorzugte Verbindungen der allgemeinen Formel (I) umfassen solche, worin X unter NRR², NH[(CH₂)ₚNH]ᵢR², SR, S(CH₂)ₑSH, S[(CH₂)ᵢS]ₜH, S[(CH₂)ₑS]ₜ(CH₂)ₛZ, NHC(S)NR¹H, S(CH₂)ᵤC(O)W, S(CH₂)ⱼNRC(S)NR¹H und OCH₂CH(OH)CH₂NH[(CH₂)ₚNH], worin Z SiO_{3/2} oder einen heteroaromatischen Ring darstellt und W NH[(CH₂)ₚNH]ᵢH darstellt, ausgewählt ist. Ist c größer als 0, ist Y unter NRR², NH[(CH₂)ₚNH]ᵢR², SR, S(CH₂)ₑSH, S[(CH₂)ⱼS]ₜH oder S[(CH₂)ₑS]ₜ(CH₂)ₛZ ausgewählt.

R und R¹ sind unabhängig voneinander unter Wasserstoff, C₁-C₁₀-Alkyl, C₁-C₂₂-Aryl und C₁-C₂₂-Alkylaryl ausgewählt; R² ist unter Wasserstoff, C₁-C₁₂-Alkyl oder C₃-Alkyl-Si(O)_{3/2} ausgewählt und R³ und R⁴ stellen Wasserstoff dar. s, t und u stellen unabhängig voneinander ganze Zahlen von 1 bis 10 dar, i stellt eine ganze Zahl von 1 bis 10.000 dar, m und n stellen unabhängig voneinander ganze Zahlen von 1 bis 5 dar und e, j, s und p stellen unabhängig voneinander ganze Zahlen von 2 bis 20 dar.

V stellt eine gegebenenfalls substituierte Gruppe dar, die unter C₁-C₁₂-Alkyl, C₂-C₂₂-Alkenyl, C₁-C₂₂-Alkyl, das mit einem Amin substituiert ist oder diese Gruppe als Teil der Kohlenwasserstoffkette enthält, ausgewählt ist.

Die freien Valenzen der Sauerstoffatome des Silikats sind durch eine oder mehrere Gruppen gesättigt, die unter einem Siliziumatom einer der anderen Verbindungen der allgemeinen Formel (I), Wasserstoff, einer linearen oder verzweigten C₁-C₁₀-Alkylgruppe und einer Endgruppe R⁵₃SiO_{1/2}, eines vernetzenden Brückenmitglieds oder einer Kette R⁵_{q}Si(OR⁶)_{g}O_{k/2} oder Al(OR⁶)₃₋ₕO_{h/2} oder R⁵Al(OR⁶)₂₋ᵣO_{r/2} ausgewählt sind, worin R⁵ und R⁶ unabhängig voneinander unter einer linearen oder verzweigten C₁-C₆-Alkylguppe und einer Arylgruppe ausgewählt sind. k ist eine ganze Zahl von 1 bis 3, q ist 1 oder 2 und g ist eine ganze Zahl zwischen 0 und 2, so dass g+k+q 4 ist. h ist eine ganze Zahl zwischen 1 und 3 und r ist 1 oder 2.

a, b, c und d stellen ganze Zahlen dar, so dass das Verhältnis b:a zwischen 0,00001 bis 10 beträgt und a und b immer größer als 0 sind. Ist c größer als 0, liegt das Verhältnis c:a+b zwischen 0,00001 und 10. Ist d größer als Null, liegt das Verhältnis d:a+b zwischen 0,00001 und 10.

Wird eine Endgruppe und/oder vernetzende Gruppe oder eine Polymerkette verwendet, liegt das Verhältnis der Endgruppe, des Vernetzungsmittels oder der Polymerketten zu a+b+c+d zwischen 0 und 999:1, bevorzugt zwischen 0,001 und 999:1 und besonders bevorzugt zwischen 0,01 und 99:1.

In einer ganz besonders bevorzugten Ausführungsform der Erfindung sind die Verbindungen der allgemeinen Formel (I) solche, worin a und b ganze Zahlen darstellen, so dass das Verhältnis b:a zwischen 0.00001 bis 10 beträgt, und c und d 0 sind. X ist unter NR[(CH₂)ₚNR¹]ᵢH, S(CH₂)ₑSH, S(CH₂)ᵤC(O)W, S(CH₂)ⱼNRC(S)NR¹H, worin W NH[(CH₂)ₚNH]ᵢH darstellt, ausgewählt, wobei R und R¹ unabhängig voneinander unter Wasserstoff oder C₁-Alkyl, ausgewählt sind, R³ und R⁴ Wasserstoff darstellen, u und i unabhängig voneinander 1 oder 2 darstellen, e, j und p unabhängig voneinander 2 oder 3 darstellen. Die freien Valenzen der Sauerstoffatome des Silikats sind durch eine oder mehrere Gruppen gesättigt, die unter einem Siliziumatom einer der anderen Verbindungen der allgemeinen Formel (I), Wasserstoff, einer linearen oder verzweigten C₁-C₁₂-Alkylgruppe und einer Endgruppe R⁵₃SiO_{1/2}, eines vernetzenden Brückenmitglieds oder einer Kette R⁵_{q}Si(OR⁶)_{g}O_{k/2} oder Al(OR⁶)₃₋ₕO_{h/2} oder R⁵Al(OR⁶)₂₋ᵣO_{r/2} ausgewählt sind, worin R⁵ und R⁶ unabhängig voneinander unter einer linearen oder verzweigten C₁-C₆-Alkylguppe, einer Arylgruppe und einer C₁-C₂₂-Alkylarylgruppe ausgewählt sind;

Besonders bevorzugt sind pyrogen hergestellte oberflächenfunktionalisierte Kieselsäuren (auch oberflächenfunktionalisierte pyrogene Kieselsäuren oder oberflächenfunktionalisierte, pyrogen hergestellte Kieselsäuren).

Die Herstellung der erfindungsgemäß verwendeten oberflächenfunktionalisierten Kieselsäuren ist beispielsweise in der DE 10 2006 048 509 A1, der WO 2009/049911 A1 und der WO 2011/128061 A1 beschrieben. Diese sind teilweise kommerziell erhältlich.

Durch die Verwendung der oben beschriebenen oberflächenfunktionalisierten Kieselsäuren lassen sich lagerstabile Reaktionsharz- und Härter-Komponenten von zwei- oder mehrkomponentigen Reaktionsharz-Zusammensetzungen wirtschaftlicher herstellen.

Daher ist ein Gegenstand der Erfindung die Verwendung einer oberflächenfunktionalisierten Kieselsäure, wie sie oben beschrieben ist, als Additiv für eine Harzkomponente auf Basis radikalisch härtbarer Verbindungen und/oder auf Epoxid-Basis.

Analog ist ein weiterer Gegenstand der Erfindung die Verwendung einer oberflächenfunktionalisierten Kieselsäure, wie sie oben beschrieben ist, als Additiv für eine Härtkomponente auf Peroxid- und/oder Amin-Basis.

Die nachfolgend zur Bezeichnung der radikalisch polymerisierbaren Verbindungen verwendete Nomenklatur "(Meth)acryl.../...(methy)acryl..." bedeutet, dass mit der dieser Bezeichnung sowohl die "Methacryl.../...methacryl..."- als auch die "Acryl.../... acryl..."-Verbindungen umfasst sein sollen.

Als radikalisch härtbare Verbindungen kommt eine Vielzahl der hierfür dem Fachmann bekannten und kommerziell erhältlichen Verbindungen in Betracht. Geeignet sind erfindungsgemäß ethylenisch ungesättigte Verbindungen, Verbindungen mit Kohlenstoff-Kohlenstoff-Dreifachbindungen und Thiol-Yn/En-Harze.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden..

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittriacrylat, Glyceroldiacrylat, wie Trimethylolpropandiacrylat, Neopentylglycolmonoacrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Oxethylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Als härtbare Epoxide kommt eine Vielzahl der hierfür dem Fachmann bekannten und kommerziell erhältlichen Verbindungen in Betracht, die im Mittel mehr als eine EpoxidGruppe, vorzugsweise im Mittel zwei oder mehr Epoxid-Gruppen, pro Molekül enthalten. Diese Epoxid-Verbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet, Geeignete Polyepoxid-Verbindungen sind z.B. in Lee, Neville, Handbook of Epoxy Resins 1967, beschrieben. Vorzugsweise handelt es sich bei den Epoxiden um Glycidylether, die sich von mehrwertigen Alkoholen, insbesondere Bisphenolen und Novolaken ableiten. Die Epoxidharze haben ein Epoxyäquivalentgewicht (EEW) von 120 bis 2000 g/Äquivalent, vorzugsweise von 140 bis 400 g/Äquivalent. Es können auch Mischungen von mehreren Epoxidharzen verwendet werden. Besonders bevorzugt werden flüssige Diglycidylether auf Basis von Bisphenol A und/oder F mit einem Epoxyäquivalentgewicht von 180 bis 190 g/Äquivalent. Es können auch Mischungen mehrer Epoxidharze verwendet werden.

Als mehrwertige Phenole sind beispielsweise zu nennen: Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan, 4,4'-Dihydroxy-3,3'-dimethyldiphenylpropan und dergleichen.

Bevorzugt ist das Epoxid ein Diglycidylether von Bisphenol A oder von Bisphenol F oder einem Gemisch davon.

Zweckmäßig wird die Härtung der radikalisch härtbaren Verbindung mit einem Peroxid initiiert. Neben dem Peroxid kann zusätzlich ein Beschleuniger verwendet werden. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Das zur Härtung der Verbindung, die mit einem Amin reagieren kann, verwendete mindestens eine Amin ist zweckmäßig ein primäres und/oder sekundäres Amin. Das Amin kann aliphatisch, cycloaliphatisch, aromatisch und/oder araliphatisch sein und ein oder mehrere Amino-Gruppen (im Folgenden als Polyamin bezeichnet) tragen. Das Polyamin trägt bevorzugt mindestens zwei primäre aliphatische Amino-Gruppen. Ferner kann das Polyamin auch Amino-Gruppen tragen, die primären, sekundären oder tertiären Charakter haben. Auch Polyaminoamide und Polyalkylenoxid-polyamine oder Aminaddukte, wie Amin-Epoxy Harzaddukte oder Mannichbasen sind ebenso geeignet. Als araliphatisch werden Amine definiert, die sowohl aromatische als auch aliphatische Reste enthalten.

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropylaminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Bevorzugt sind Polyamine, wie 2-Methylpentandiamin (DYTEK A®), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(aminomethyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

In diesem Zusammenhang wird Bezug genommen auf die Anmeldung EP 1 674 495 A1.

Das Amin kann entweder alleine oder als Gemisch aus zweien oder mehreren davon eingesetzt werden.

In einer bevorzugten Ausführungsform enthält die Harz-Komponente weitere niederviskose, radikalisch polymerisierbare Verbindungen bzw. weitere niedrigviskose Epoxid-Verbindungen als Reaktivverdünner, um die Viskosität der Harz-Komponente anzupassen, falls erforderlich.

Geeignete Reaktivverdünner für Harze auf Basis radikalisch härtbarer Verbindungen sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1,0.^{2.6}-decan, Dicyclopentenyloxyethylcrotonat, 3-(Meth)acryloyl-oxymethyl-tricylo-5.2.1,0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

Als Reaktivverdünner für die Harz-Komponente auf Epoxid-Basis finden Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxoid-Funktionalität von mindestens 2, wie 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE), oder ferner Mischungen von zwei oder mehr dieser Reaktivverdünner Verwendung, vorzugsweise Triglycidylether, besonders bevorzugt als Gemisch aus 1,4-Butandioldiglycidylether (BDDGE) und Trimethylolpropantriglycidylether (TMPTGE).

Die Peroxide werden bevorzugt durch einen Beschleuniger initiiert. Geeignete Beschleuniger, die dem Fachmann bekannt sind, sind zweckmäßig Amine.

Als Inhibitoren sowohl für die Lagerstabilität der radikalisch härtbaren Verbindung und damit der Harzkomponente auf Basis radikalisch härtbarer Verbindungen als auch zur Einstellung deren Gelzeit sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktionsharzen sind, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Napthochinon, oder Gemische von zweien oder mehreren davon, in Frage.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-oxylradikale können beispielsweise solche verwendet werden, wie sie in der DE 199 56 509 beschrieben sind. Geeignete stabile N-oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder in para-Position zur Hydroxylgruppe substituierte Pyrimidinol- oder Pyridinol-Verbindungen, wie sie in der nicht vorveröffentlichten Patentschrift Anmeldung DE 10 2011 077 248 B1 beschrieben sind, und dergleichen.

Die Inhibitoren können, abhängig von den gewünschten Eigenschaften der Harzzusammensetzungen, entweder alleine oder als Kombination von zweien oder mehreren davon verwendet werden. Die Kombination der phenolischen und der nicht-phenolischen Inhibitoren ermöglicht dabei einen synergistischen Effekt, wie auch die Einstellung einer im Wesentlichen driftfreien Gelierzeit der Reaktionsharzformulierung zeigt.

Die Harz- und/oder die Härter-Komponente kann ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkylniederalkanoylamide, wie Dimethylacetamid, Niederalkylbenzole, wie Xylole oder Toluol, Phthalsäureester oder Paraffine, Wasser oder Glykole.

In dieser Hinsicht wird Bezug genommen auf die Anmeldungen WO 02/079341 und WO 02/079293.

Bei einer besonders bevorzugten Ausführungsform enthält die Harz-Komponente auf Basis radikalisch härtbarer Verbindungen neben der radikalisch härtbaren Verbindung zusätzlich noch eine hydraulisch abbindende oder polykondensierbare anorganische Verbindung, insbesondere Zement, und die Komponente (B) neben dem Härtungsmittel für die radikalisch härtbare Verbindung noch Wasser. Derartige Hybridmörtelsysteme sind ausführlich in DE 42 31 161 A1 beschrieben. Dabei enthält die Komponente (A) vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Die polykondensierbare anorganische Verbindung umfasst auch silikatische, polykondensierbare Verbindungen, insbesondere lösliches, gelöstes und/oder amorphes Siliziumdioxid enthaltende Stoffe.

Die Harz- und/oder Härterkomponenten findet vor allem zur chemischen Befestigung von Verankerungselementen, wie Ankern, Bewehrungseisen, schrauben und der gleichen, in Bohrlöchern Verwendung, insbesondere in Bohrlöchern in verschiedenen mineralischen Untergründen, wie solche auf der Grundlage von Beton, Porenbeton, Ziegelwerk, Kalksandstein, Sandstein, Naturstein und dergleichen, verwendung.

Die folgenden Beispiele dienen der weiteren Erläuterung der Erfindung.

### AUSFÜHRUNGSBEISPIELE

Zur Bestimmung der Lagerstabilität der Härterkomponente für ein Hybridbindemittelsystem, umfassend eine Harzkomponente, die radikalisch härtbare Methacrylatverbindungen und Epoxidverbindungen gemäß der EP 2357162 A1 enthält, wurden mit den nachfolgend beschriebenen Komponenten jeweils eine Mörtelmasse hergestellt und deren Aushärteverhalten nach unterschiedlichen Lagerzeiten mittels kalorimetrischer Differenzkalorimetrie (DSC) untersucht.

### Beispiele 1 bis 3

### Härterkomponente

Zur Herstellung der Härterkomponenten werden 48 g (38,5 Gew.-%) 2-Methyl-1,5-pentandiamin (DYTEK® A, INVISTA (Deutschland) GmbH), 8 g (6,4 Gew.-%) tert-Butylperoxybenzoat (Trigonox® C, Akzo Nobel Polymer Chemicals bv), 56 g Quarzmehl (Millisil® W12 (technisch), Quarzwerke GmbH; enthaltene Metallverbindungen: 0,3 % Al₂O₃, 0,05 Fe₂O₃, 0,1 % CaO und MgO, 0,2% Na₂O und K₂O) und 11,2 g (9 Gew.-%) einer hydrophoben pyrogenen Kieselsäure und jeweils 1,4 g (1,1 Gew.-%) der aus Tabelle 1 ersichtlichen oberflächenfunktionalisierten Kieselsäuren mit einem Holzspatel vorgemischt und anschließend in einem Planeten Dissolver der Fa. PC Laborsystem bei 3500 U/min bei 80 mbar über 10 Minuten dispergiert, wobei eine homogene Masse erhalten wird.

### Harzkomponente

Als Harzkomponente wurde eine Harzkomponente gemäß Beispiel 1 der EP 2357162 A1 hergestellt.

**Tabelle 1: verwendete oberflächenfunktionalisierte Kieselsäuren**

| **Beispiel** | **Ligand** |
|---|---|
| **1^{a)}** | 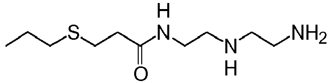 |
| **2 ^{b)}** | 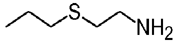 |
| **3^{c)}** | 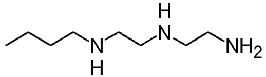 |

| | |
|---|---|
| ^{a)}STA3, PhosphonicS Ltd ^{b)}SEA, PhosphonicS Ltd ^{c)}PhosphonicS Ltd | |

### Vergleichsbeispiel 1

Als Vergleich dient eine Härterkomponente, die analog den Beispielen 1 bis 3 hergestellt wurde, mit dem Unterschied, dass keine oberflächenfunktionalisierte Kieselsäure als Metallfänger zugemischt wurde. Die Harzkomponente entspricht der aus den Beispielen 1 bis 3.

### Bestimmung der Lagerstabilität

Zur Bestimmung der Lagerstabilität wurden die Härterkomponenten bei +40°C nach dem aus Tabelle 2 ersichtlichen Zeitplan gelagert. Nach Lagerung wurden die Härterkomponenten jeweils mit einer frisch hergestellten und über einen Tag bei +40°C gelagerten Harzkomponente im Volumenverhältnis (v/v) Harzkomponente:Härterkomponente von etwa 5:1 zu einer Mörtelmasse vermischt. Die Lagerstabilität wurde anhand der Temperaturverläufe der Aushärtung beurteilt.

**Tabelle 2: Lagerzeiten der Harz- und Härterkomponenten**

| | Lagerzeit [Tage] | | | |
|---|---|---|---|---|
| Harzkomponente | 1 | 1 | 1 | 1 |
| Härterkomponenten | 1 | 70 | 91 | 154 |

**Tabelle 3: Ergebnisse der isothermen dynamischen Differenzkalorimetrie bei +40°C**

| Beispiel | Lagerdauer Härterkomponente [Tage] | Peaktemperatur (= maximale Aushärterate) [°C] | Zeit bis zum Erreichen der maximalen Aushärterate [min] |
|---|---|---|---|
| 1 | **1** | **137** | **14** |
| | 70 | 132 | 8 |
| | **91** | **140** | **7** |
| | 154 | 63 | - *) |
| 2 | **1** | **142** | **13** |
| | 70 | 140 | 9 |
| | **91** | **131** | **7** |
| | 154 | 51 | -*) |
| 3 | **1** | **140** | **13** |
| | 70 | 144 | 8 |
| | **91** | **133** | **7** |
| | 154 | 113 | 9 |
| Vergleich | **1** | **118** | **11** |
| | 14 | 140 | 10 |
| | 42 | 126 | 9 |
| | **91** | **48** | **-*)** |
| | 154 | **(48)** | **-*)** |

| | | | |
|---|---|---|---|
| *) keine nennenswerte Vernetzung eingetreten | | | |

Aus Tabelle 3 ist ersichtlich, dass alle Proben, bei denen die Härterkomponente nur einen Tag gelagert wurde, eine vergleichbare Aushärtung zeigen.

Die Vergleichszusammensetzung härtete nach einer Lagerdauer von 91 Tagen (13 Wochen) nicht mehr aus. Dies ist darauf zurückzuführen, dass der Härter, insbesondere das Peroxid, durch die anwesenden Metallverbindungen soweit inaktiviert wird, dass keine Reaktion zumindest der radikalisch härtbaren Verbindung mehr eintritt.

Bei einer Lagerung über denselben Zeitraum hinweg, wird hingegen bei den Härterkomponenten, denen erfindungsgemäß ein Metallfänger zugegebenen wurde, keine oder kaum eine Inaktivierung der Peroxidverbindung beobachtet. Die Peaktemperatur ist bei allen Beispielen vergleichbar mit der frisch (Lagerung Härterkomponente: 1 Tag) Zusammensetzung. Erst bei einer Lagerung bei +40°C über 154 Tage (22 Wochen) härten die Mörtelmassen mit den Häerterkomponenten der Beispiele 1 und 2 nicht mehr aus, entsprechend einer Inaktivierung der Peroxidverbindung. Allerdings zeigt die Mörtelmasse, die mit der Härterkomponente aus Beispiel 3 hergestellt wurde keine Inaktivierung der Peroxidverbindung, was an der weiterhin hohen Peaktemperatur und der Zeit bis zum erreichen der Peaktemperatur zu erkennen ist.

Damit konnte gezeigt werden, dass durch die Zugabe einer oberflächenfunktionalisierten Kieselsäure, die an ihrer Oberfläche organische mehrzähnige Liganden tragen, die mit Metallen oder Metallverbindungen einen Chelat-Komplex bilden können, zu einer Härterkomponente, die metallhaltige Füllstoffe enthält, als Additiv, die Lagerstabilität verglichen mit einer entsprechenden Härterkomponente ohne dieses Additiv deutlich erhöht werden konnte. Die Entsprechenden Mörtelmassen härteten auch noch nach einer Lagerung bei +40°C über 13 Wochen vollständig aus.

## Patentansprüche

1. Verwendung einer oberflächenfunktionalisierten Kieselsäure, wobei die Kieselsäure an ihrer Oberfläche organische mehrzähnige Liganden trägt, die mit Metallen oder Metallverbindungen einen Chelat-Komplex bilden können, als Additiv zur Erhöhung der Lagerstabilität von Harz- und/oder Härterkomponenten einer mehrkomponentigen Reaktionsharz-Zusammensetzung, wobei die Härterkomponente auf Peroxid- und/oder Amin-Basis und die Harzkomponenten auf Basis radikalisch härterer Verbindungen und/oder Epoxid-Basis ist.

2. Verwendung nach Anspruch 1, wobei die oberflächenfunktionalisierte Kieselsäure eine Verbindung der allgemeinen Formel (I) ist
[O_{4/2}Si]ₐ[O_{3/2}SiCH₂(CR³R⁴)ₘX]_{b}[O_{3/2}SiCH₂(CR³R⁴)ₙY]_{c}[O_{3/2}SiV]_{d} (I),
worin
X unter NRR², NR[(CH₂)ₚNR¹]ᵢR², SR, S(CH₂)ₑSR, S(CH₂)_{f}U, S[(CH₂)ⱼS]ₜR, S[(CH₂)ₑS]ₜ(CH₂)ₛZ, NRC(S)NR¹H, SCH₂CH(NHR)CO₂E, SCH₂CH(CO₂E)CH₂CO₂E, S(CH₂)ₗOR, S(CH₂)ᵤC(O)W, S(CH₂)ⱼNRC(S)NR¹H und OCH₂CH(OH)CH₂NR[(CH₂)ₚNR¹]ᵢR³, worin U einen heteroaromatischen Ring darstellt, Z SiO_{3/2} oder einen heteroaromatischen Ring darstellt, E Wasserstoff, C₁-C₁₀-Alkyl oder ein Metallion M darstellt und W OH, OR, OM oder NR[(CH₂)ₚNR¹]ᵢR² darstellt, ausgewählt ist;
Y unter NRR², NR[(CH₂)ₚNR¹]ᵢR², SR, S(CH₂)ₑSR, S(CH₂)_{f}U, S[(CH₂)ⱼS]ₜR oder S[(CH₂)ₑS]ₜ(CH₂)ₛZ ausgewählt ist;
R, R¹, R³ und R⁴ unabhängig voneinander unter Wasserstoff, C₁-C₂₂-Alkyl, C₁-C₂₂-Aryl und C₁-C₂₂-Alkylaryl ausgewählt sind; R² unter Wasserstoff, C₁-C₂₂-Alkyl oder C₂-C₁₀-Alkyl-Si(O)_{3/2} ausgewählt ist;
l, s, t und u unabhängig voneinander ganze Zahlen von 1 bis 100 darstellen;
i eine ganze Zahl von 1 bis 10.000 darstellt;
m und n unabhängig voneinander eine ganze Zahl von 1 bis 100 darstellen; und
e, f, j und p unabhängig voneinander eine ganze Zahl von 2 bis 20 darstellen;
V eine gegebenenfalls substituierte Gruppe darstellt, die unter C₁-C₂₂-Alkyl, C₂-C₂₂-Alkenyl, C₂-C₂₂-Alkinyl, Aryl, C₁-C₂₂-Alkylaryl, C₁-C₂₂-Alkyl, das mit einem Sulfid, Sulfoxid, Sulfon, Amin, Polyalkylamin, Phosphin oder anderen Phosphor-haltigen Gruppen substituiert ist oder diese Gruppen als Teil der Kohlenwasserstoffkette enthält;
die freien Valenzen der Sauerstoffatome des Silikats durch
eine oder mehrere Gruppen gesättigt sind, die unter einem Siliziumatom von anderen Verbindungen der allgemeinen Formel (I), Wasserstoff, einer linearen oder verzweigten C₁-C₂₂-Alkylgruppe, einer Endgruppe R⁵₃M¹O_{1/2}, einem vernetzenden Brückenmitglied oder einer Kette R⁵_{q}M¹(OR⁶)_{g}O_{k/2} oder Al(OR⁶)₃₋ₕO_{h/2} oder R⁵Al(OR⁶)₂₋ᵣO_{r/2}, worin M¹ Si oder Ti darstellt; R⁵ und R⁶ unabhängig voneinander unter einer linearen oder verzweigten C₁-C₂₂-Alkylguppe, Arylgruppe und C₁-C₂₂-Alkylarylgruppe, k eine ganze Zahl von 1 bis 3 darstellt, q 1 oder 2 darstellt, und g eine ganze Zahl von 0 bis 2 darstellt, wobei g + k + q = 4 ist, h eine ganze Zahl von 1 bis 3 darstellt und r 1 oder 2 darstellt; oder einem Oxometall-Bindungssystem, wobei das Metall Zirkonium, Bor, Magnesium, Eisen, Nickel oder ein Lanthanid ist, ausgewählt sind;
a, b, c und d ganze Zahlen darstellen, so dass das Verhältnis b:a zwischen 0,00001 und 100.000 liegt und a und b immer größer als 0 sind, und wenn c größer als 0 ist, das Verhältnis c:a+b zwischen 0,00001 und 100.000 liegt, und wenn d größer als Null ist, das Verhältnis d:a+b zwischen 0,00001 und 100.000 liegt; wird eine Endgruppe und/oder vernetzende Gruppe oder eine Polymerkette verwendet, liegt bevorzugt das Verhältnis der Endgruppe, des Vernetzungsmittels oder der Polymerketten zu a+b+c+d zwischen 0 und 999:1, bevorzugt zwischen 0,001 und 999:1 und besonders bevorzugt zwischen 0,01 und 99:1.

3. Verwendung nach Anspruch 2, wobei die oberflächenfunktionalisierte Kieselsäure eine Verbindung der allgemeinen Formel (I) ist, worin
X unter NRR², NR[(CH₂)ₚNR¹]ᵢR², SR, S(CH₂)ₑSR, S[(CH₂)ᵢS]ₜR, S[(CH₂)ₑS]ₜ(CH₂)ₛZ, NRC(S)NR¹H, S(CH₂)ᵤC(O)W, S(CH₂)ⱼNRC(S)NR¹H und OCH₂CH(OH)CH₂NR[(CH₂)ₚNR¹]ᵢR³ worin Z SiO_{3/2} oder einen heteroaromatischen Ring darstellt, und W NR[(CH₂)ₚNR¹]ᵢR² darstellt, ausgewählt ist;
und wenn c größer als 0 ist, ist Y unter NRR², NR[(CH₂)ₚNR¹]ᵢR², SR, S(CH₂)ₑSR, S[(CH₂)ⱼS]ₜR oder S[(CH₂)ₑS]ₜ(CH₂)ₛZ ausgewählt;
R und R¹ unabhängig voneinander unter Wasserstoff, C₁-C₁₀-Alkyl, C₁-C₂₂-Aryl und C₁-C₂₂-Alkylaryl ausgewählt sind; R² unter Wasserstoff, C₁-C₂₂-Alkyl oder C₂-C₁₀-Alkyl-Si(O)_{3/2} ausgewählt ist; R³ und R⁴ Wasserstoff darstellen;
s, t und u unabhängig voneinander ganze Zahlen von 1 bis 20 darstellen;
i eine ganze Zahl von 1 bis 10.000 darstellt;
m und n unabhängig voneinander eine ganze Zahl von 1 bis 10 darstellen; und
e, j und p unabhängig voneinander eine ganze Zahl von 2 bis 20 darstellen;
V eine gegebenenfalls substituierte Gruppe darstellt, die unter C₁-C₂₂-Alkyl, C₂-C₂₂-Alkenyl, C₂-C₂₂-Alkinyl, Aryl, C₁-C₂₂-Alkylaryl, C₁-C₂₂-Alkyl, das mit einem Sulfid, Sulfoxid, Sulfon, Amin oder Polyalkylamin substituiert ist oder diese Gruppen als Teil der Kohlenwasserstoffkette enthält;
die freien Valenzen der Sauerstoffatome des Silikats durch
eine oder mehrere Gruppen gesättigt sind, die unter einem Siliziumatom einer der anderen Verbindungen der allgemeinen Formel (I), Wasserstoff, einer linearen oder verzweigten C₁-C₁₂-Alkylgruppe und einer Endgruppe R⁵₃SiO_{1/2}, eines vernetzenden Brückenmitglieds oder einer Kette R⁵_{q}Si(OR⁶)_{g}O_{k/2} oder Al(OR⁶)₃₋ₕO_{h/2} oder R⁵Al(OR⁶)₂₋ᵣO_{r/2} ausgewählt sind, worin R⁵ und R⁶ unabhängig voneinander unter einer linearen oder verzweigten C₁-C₆-Alkylguppe, Arylgruppe und C₁-C₂₂-Alkylarylgruppe ausgewählt sind;
a, b, c und d ganze Zahlen darstellen, so dass das Verhältnis b:a zwischen 0,00001 und 100 beträgt und a und b immer größer als 0 sind, und wenn c größer als 0 ist, das Verhältnis c:a+b zwischen 0,00001 und 100 liegt und wenn d größer als Null ist, das Verhältnis von d:a+b zwischen 0,00001 und 100 liegt; wird eine Endgruppe und/oder ein Vernetzungsmittel oder eine Polymerkette verwendet, liegt das Verhältnis der Endgruppe, des Vernetzungsmittels oder der Polymerketten zu a+b+c+d zwischen 0 und 999:1, bevorzugt zwischen 0,001 und 999:1 und besonders bevorzugt zwischen 0,01 und 99:1.

4. Verwendung nach Anspruch 3, wobei die oberflächenfunktionalisierte Kieselsäure eine Verbindung der allgemeinen Formel (I) ist, worin
X unter NRR², NH[(CH₂)ₚNH]ᵢR², SR, S(CH₂)ₑSH, S[(CH₂)ᵢS]ₜH, S[(CH₂)ₑS]ₜ(CH₂)ₛZ, NHC(S)NR¹H, S(CH₂)ᵤC(O)W, S(CH₂)ⱼNRC(S)NR¹H und OCH₂CH(OH)CH₂NH[(CH₂)ₚNH]ᵢH, worin Z SiO_{3/2} oder einen heteroaromatischen Ring darstellt und W NH[(CH₂)ₚNH]ᵢH darstellt, ausgewählt ist;
und wenn c größer als 0 ist, ist Y unter NRR¹, NH[(CH₂)ₚNH]ᵢRH, SR, S(CH₂)ₑSH, S[(CH₂)ⱼS]ₜH oder S[(CH₂)ₑS]ₜ(CH₂)ₛZ ausgewählt;
R und R¹ unabhängig voneinander unter Wasserstoff, C₁-C₁₀-Alkyl, C₁-C₂₂-Aryl und C₁-C₂₂-Alkylaryl ausgewählt sind; R² unter Wasserstoff, C₁-C₂₂-Alkyl oder C₃-Alkyl-Si(O)_{3/2} ausgewählt ist; R³ und R⁴ Wasserstoff darstellen;
s, t und u unabhängig voneinander ganze Zahlen von 1 bis 10 darstellen;
i eine ganze Zahl von 1 bis 10.000 darstellen;
m und n unabhängig voneinander ganze Zahlen von 1 bis 5 darstellen; und
e, j, s und p unabhängig voneinander ganze Zahlen von 2 bis 10 darstellen;
V eine gegebenenfalls substituierte Gruppe darstellt, die unter C₁-C₁₂-Alkyl, C₂-C₂₂-Alkenyl, C₂-C₂₂-Alkinyl, Aryl, C₁-C₂₂-Alkyl, das mit einem Sulfid oder einem Amin substituiert ist oder diese Gruppen als Teil der Kohlenwasserstoffkette enthält, ausgewählt ist;
die freien Valenzen der Sauerstoffatome des Silikats durch
eine oder mehrere Gruppen gesättigt sind, die unter einem Siliziumatom einer der anderen Verbindungen der allgemeinen Formel (I), Wasserstoff, einer linearen oder verzweigten C₁-C₁₂-Alkylgruppe und einer Endgruppe R⁵₃SiO_{1/2}, eines vernetzenden Brückenmitglieds oder einer Kette R⁵_{q}Si(OR⁶)_{g}O_{k/2} oder Al(OR⁶)₃₋ₕO_{h/2} oder R⁵Al(OR⁶)₂₋ᵣO_{r/2} ausgewählt sind, worin R⁵ und R⁶ unabhängig voneinander unter einer linearen oder verzweigten C₁-C₆-Alkylguppe, einer Arylgruppe und einer C₁-C₂₂-Alkylarylgruppe ausgewählt sind;
a, b, c und d ganze Zahlen darstellen, so dass das Verhältnis b:a zwischen 0,00001 bis 10 beträgt und a und b immer größer als 0 sind, und wenn c größer als 0 ist, das Verhältnis c:a+b zwischen 0,00001 und 10 liegt, und wenn d größer als Null ist, das Verhältnis d:a+b zwischen 0,00001 und 10 liegt; wird eine Endgruppe und/oder vernetzende Gruppe oder eine Polymerkette verwendet, liegt das Verhältnis der Endgruppe, des Vernetzungsmittels oder der Polymerketten zu a+b+c+d zwischen 0 und 99:1, bevorzugt zwischen 0,001 und 99:1 und besonders bevorzugt zwischen 0,01 und 9:1.

5. Verwendung nach Anspruch 4, wobei die oberflächenfunktionalisierte Kieselsäure eine Verbindung der allgemeinen Formel (I) ist, worin
X unter NR[(CH₂)ₚNR¹]ᵢR², S(CH₂)ₑSH, S(CH₂)ᵤC(O)W, S(CH₂)ⱼNRC(S)NR¹H, worin W NH[(CH₂)ₚNH]ᵢH darstellt, ausgewählt ist;
c und d 0 sind;
R und R¹ unabhängig voneinander unter Wasserstoff oder C₁-Alkyl, ausgewählt sind; R² Wasserstoff darstellt; R³ und R⁴ Wasserstoff darstellen;
u und i unabhängig voneinander 1 oder 2 darstellen;
e, j und p unabhängig voneinander 2 oder 3 darstellen;
die freien Valenzen der Sauerstoffatome des Silikats durch
eine oder mehrere Gruppen gesättigt sind, die unter einem Siliziumatom einer der anderen Verbindungen der allgemeinen Formel (I), Wasserstoff, einer linearen oder verzweigten C₁-C₁₂-Alkylgruppe und einer Endgruppe R⁵₃SiO_{1/2}, eines vernetzenden Brückenmitglieds oder einer Kette R⁵_{q}Si(OR⁶)_{g}O_{k/2} oder Al(OR⁶)₃₋ₕO_{h/2} oder R⁵Al(OR⁶)₂₋ᵣO_{r/2} ausgewählt sind, worin R⁵ und R⁶ unabhängig voneinander unter einer linearen oder verzweigten C₁-C₆-Alkylguppe, einer Arylgruppe und einer C₁-C₂₂-Alkylarylgruppe ausgewählt sind;
a und b ganze Zahlen darstellen, so dass das Verhältnis b:a zwischen 0,00001 und 10 liegt.

6. Verwendung nach einem der Ansprüche 1 bis 5, wobei die oberflächenfunktionalisierte Kieselsäure eine oberflächenfunktionalisierte, pyrogen hergestellte Kieselsäure ist.

## Claims

1. Use of a surface-functionalised silica acid, wherein the silica acid carries on its surface organic multidentate ligands, which with metals or metal compounds can form a chelate complex, as an additive for increasing the storage stability of resin compounds and/or hardening compounds of a multicomponent reaction resin compound, wherein the hardening components are on a peroxide basis and/or amine base and the resin components are on a basis of radical hardener compounds and/or an epoxide basis.

2. Use according to claim 1, wherein the surface-functionalised silica acid is a compound of the general formula (1)
[O_{4/2}Si]ₐ[O_{3/2}SiCH₂(CR³R⁴)ₘX]_{b}[O_{3/2}SiCH₂(CR³R⁴)ₙY]ₒ[O_{3/2}SiV]_{d} (1)
wherein
X is selected from
NRR², NR[(CH₂)ₚNR¹]ᵢR², SR, S(CH₂)ₑSR, S(CH₂)_{f}U, S[(CH₂)ⱼS]ₜR, S[(CH₂)ₑS]ₜ(CH₂)ₛZ, NRC(S)NR¹H, SCH₂CH(NHR)CO₂E,
SCH₂CH(CO₂E)CH₂CO₂E, S(CH₂)ₗOR, S(CH₂)ᵤC(O)W,
S(CH₂)ⱼ(NRC(S)NR¹H and OCH₂CH(OH)CH₂NR[(CH₂)ₚNR¹]ᵢR³, where U represents a heteroaromatic ring, Z represents SiO_{3/2} or a heteroaromatic ring, E represents hydrogen, C₁-C₁₀-alkyl or a metal ion M, and W represents OH, OR, OM or NR[(CH₂)ₚNR¹]ᵢR²;
Y is selected from
NRR², NR[(CH₂)ₚNR¹]ᵢR², SR, S(CH₂)ₑSR, S(CH₂)_{f}U, S[(CH₂)ⱼS]₁R,
or S[(CH₂)ₑS]ₜ(CH₂)ₛZ;
R, R¹, R³ and R⁴ are selected, independently from one another, from hydrogen, C₁-C₂₂-alkyl, C₁-C₂₂-aryl and C₁-C₂₂-alkaryl; R² from hydrogen, C₁-C₂₂-alkyl, or C₂-C₁₀-alkyl-Si(O)_{3/2};
1, s, t and u represent, independently of one another, whole numbers from 1 to 100;
i represents a whole number from 1 to 10,000;
m and n represent, independently of one another, a whole number from 1 to 100; and
e, f, j and p represent, independently of one another, a whole number from 2 to 20;
V represents, as appropriate, a substituted group from among C₁-C₂₂-alkyl, C₂-C₂₂-alkenyl, C₂-C₂₂-alkinyl, aryl, C₁-C₂₂-alkyaryl, C₁-C₂₂-alkyl, which is substituted with a sulphide, sulfoxide, sulfone, amine, polyalkylamine, phosphine, or other groups containing phosphorous, or contains these groups as part of the hydrocarbon chain;
the free valences of the oxygen atoms of the silicate are saturated by
one or more groups, which are selected from a silicon atom from the other compounds of the general formula (1), hydrogen, a linear or branched C₁-C₂₂-alkyl group, an end group R⁵₃M¹O_{1/2}, a cross-linking bridge member, or a chain R⁵_{q}M¹(OR⁶)_{g}O_{k/2} or Al(OR⁶)₃₋ₕO_{h/2} or R⁵Al(OR⁶)₂₋ᵣO_{r/2}, where M¹ represents Si or Ti; R⁵ and R⁶ represent, independently of one another, a linear or branched C₁-C₂₂-alkyl group, aryl group, and C₁-C₂₂-alkaryl group, k represents a whole number from 1 to 3, q represents 1 or 2, and g represents a whole number from 0 to 2, wherein g + k + q = 4, h represents a whole number from 1 to 3, and r represents 1 or 2; or an oxo-metal bonding system, wherein the metal is selected from zirconium, boron, magnesium, iron, nickel, or a lanthanide;
a, b, c and d represent whole numbers, such that the ratio b:a lies between 0.00001 and 100,000 and a and b are always greater than 0, and, if c is greater than 0, the ratio c:a+b lies between 0.00001 and 100,000, and, if d is greater than zero, the ratio d:a+b lies between 0.00001 and 100,000; if an end group and/or cross-linking group or a polymer chain is used, then the ratio of the end group, the cross-linking agent, or the polymer chains to a+b+c+d lies between 0 and 999:1, preferably between 0.001 and 999:1, and for particular preference between 0.01 and 99.1.

3. Use according to claim 2, wherein the surface-functionalised silica acid is a compound of the general formula (1), wherein
X is selected from
NRR², NR[(CH₂)ₚNR¹]ᵢR², SR, S(CH₂)ₑSR, S[(CH₂)ᵢS]ₜR,
S[(CH₂)ₑS]ₜ(CH₂)ₛZ, NRC(S)NR¹H, S(CH₂)ᵤC(O)W, S(CH₂)ⱼNRC(S)NR¹H and OCH₂CH(OH)CH₂NR[(CH₂)ₚNR¹]ᵢR³, wherein Z represents SiO_{3/2} or a heteroaromatic ring, and W represents NR[(CH₂)ₚNR¹]ᵢR²;
and, if c is greater than 0, then Y is selected from NRR², NR[(CH₂)ₚNR¹]ᵢR², SR, S(CH₂)ₑSR, S[(CH₂)ⱼS]ₜR or S[(CH₂)ₑS]ₜ(CH₂)ₛZ;
R and R¹ are selected, independently of one another, from hydrogen, C₁-C₂₂-alkyl, C₁-C₂₂-aryl and C₁-C₂₂-alkaryl; R² from hydrogen, C₁-C₂₂-alkyl, or C₂-C₁₀-alkyl-Si(O)_{3/2}; R³ and R⁴ represent hydrogen;
s, t and u represent, independently of one another, whole numbers from 1 to 20;
i represents a whole number from 1 to 10,000;
m and n represent, independently of one another, a whole number from 1 to 10; and
e, j and p represent, independently of one another, a whole number from 2 to 20;
V represents, as appropriate, a substituted group from among C₁-C₂₂-alkyl, C₂-C₂₂-alkenyl, C₂-C₂₂-alkinyl, aryl, C₁-C₂₂-alkyaryl, C₁-C₂₂-alkyl, which is substituted with a sulphide, sulfoxide, sulfone, amine or polyalkylamine, or contains these groups as part of the hydrocarbon chain;
the free valences of the oxygen atoms of the silicate are saturated by
one or more groups, which are selected from a silicon atom of one of the other compounds of the general formula (1), hydrogen, a linear or branched C₁-C₁₂-alkyl group, and an end group R⁵₃SiO_{1/2}, a cross-linking bridge member, or a chain R⁵_{q}Si(OR⁶)_{g}O_{k/2} or Al(OR⁶)₃₋ₕO_{h/2} or R⁵Al(OR⁶₂₋ᵣO_{r/2}, where R⁵ and R⁶, independently of one another, are selected from a linear or branched C₁-C₆-alkyl group, aryl group, and C₁-C₂₂-alkaryl group;
a, b, c and d represent whole numbers, such that the ratio b:a lies between 0.00001 and 100, and a and b are always greater than 0, and, if c is greater than 0, the ratio c:a+b lies between 0.00001 and 100, and, if d is greater than zero, the ratio d:a+b lies between 0.00001 and 100; if an end group and/or cross-linking group or a polymer group is used, then the ratio of the end group, the cross-linking agent, or the polymer chains to a+b+c+d lies between 0 and 999:1, preferably between 0.001 and 999:1, and for particular preference between 0.01 and 99:1.

4. Use according to claim 3, wherein the surface-functionalised silica acid is a compound of the general formula (1), wherein
X is selected from
NRR², NH[(CH₂)ₚNH]ᵢR², SR, S(CH₂)ₑSH, S[(CH₂)ᵢS]ₜH,
S[(CH₂)ₑS]ₜ(CH₂)ₛZ, NHC(S)NR¹H, S(CH₂)ᵤC(O)W, S(CH₂)ⱼNRC(S)NR¹H and OCH₂CH(OH)CH₂NH[(CH₂)ₚNH]ᵢH, where Z represents SiO_{3/2} or a heteroaromatic ring and W represents NH[(CH₂)ₚNH]ᵢH;
and, if c is greater than 0, then Y is selected from NRR¹, NH[(CH₂)ₚNH]ᵢRH, SR, S(CH₂)ₑSH, S[(CH₂)ⱼS]ₜH or S[(CH₂)ₑS]ₜ(CH₂)ₛZ;
R and R¹ are selected, independently of one another, from hydrogen, C₁-C₁₀-alkyl, C₁-C₂₂-aryl and C₁-C₂₂-alkaryl; R² from hydrogen, C₁-C₂₂-alkyl, or C₃-alkyl-Si(O)_{3/2}; R³ and R⁴ represent hydrogen;
s, t and u represent, independently of one another, whole numbers from 1 to 10;
i represents a whole number from 1 to 10,000;
m and n represent, independently of one another, a whole number from 1 to 5; and
e, j, s and p represent, independently of one another, whole numbers from 2 to 10;
V represents, as appropriate, a substituted group from among C₁-C₁₂-alkyl, C₂-C₂₂-alkenyl, C₂-C₂₂-alkinyl, aryl, C₁-C₂₂-alkyl, which is substituted with a sulphide or an amine, or contains these groups as part of the hydrocarbon chain;
the free valences of the oxygen atoms of the silicate are saturated by
one or more groups, which are selected from a silicon atom of one of the other compounds of the general formula (1), hydrogen, a linear or branched C₁-C₁₂-alkyl group, and an end group R⁵₃SiO_{1/2}, a cross-linking bridge member, or a chain R⁵_{q}Si(OR⁶)_{g}O_{k/2} or Al(OR⁶)₃₋ₕO_{h/2} or R⁵Al(OR⁶)₂₋ᵣO_{r/2}, where R⁵ and R⁶, independently of one another, are selected from a linear or branched C₁-C₆-alkyl group, an aryl group, and a C₁-C₂₂-alkaryl group;
a, b, c and d represent whole numbers, such that the ratio b:a lies between 0.00001 to 10, and a and b are always greater than 0, and, if c is greater than 0, the ratio c:a+b lies between 0.00001 and 10, and, if d is greater than zero, the ratio d:a+b lies between 0.00001 and 10; if an end group and/or cross-linking group or a polymer group is used, then the ratio of the end group, the cross-linking agent, or the polymer chains to a+b+c+d lies between 0 and 99:1, preferably between 0.001 and 99:1, and for particular preference between 0.01 and 9:1.

5. Use according to claim 4, wherein the surface-functionalised silica acid is a compound of the general formula (1), wherein
X is selected from
NR[(CH₂)ₚNR¹]ᵢR², S(CH₂)ₑSH, S(CH₂)ᵤC(O)W, S(CH₂)ⱼNRC(S)NR¹H,
wherein W represents NH[(CH₂)ₚNH]ᵢH;
c and d are 0;
R and R¹ are selected, independently of one another, from hydrogen or C₁-alkyl; R² represents hydrogen; R³ and R⁴ represent hydrogen;
u and i represent, independently of one another, 1 or 2;
e, j and p represent, independently of one another, 2 or 3;
the free valences of the oxygen atoms of the silicate are saturated by
one or more groups, which are selected from a silicon atom of one of the other compounds of the general formula (1), hydrogen, a linear or branched C₁-C₁₂-alkyl group, and an end group R⁵₃SiO_{1/2}, a cross-linking bridge member, or a chain R⁵_{q}Si(OR⁶)_{g}O_{k/2} or Al(OR⁶)₃₋ₕO_{h/2} or R⁵Al(OR⁶)₂₋ᵣO_{r/2}, where R⁵ and R⁶, independently of one another, are selected from a linear or branched C₁-C₆-alkyl group, an aryl group, and a C₁-C₂₂-alkaryl group;
a and b represent whole numbers, such that the ratio b:a lies between 0.00001 and 10.

6. Use according to any one of claims 1 to 5, wherein the surface-functionalised silica acid is a surface-functionalised pyrogenically-produced silica acid.

## Revendications

1. Utilisation d'un acide silicique fonctionnalisé en surface, dans laquelle l'acide silicique porte sur sa surface des ligands polydentés organiques qui peuvent former un complexe chélaté avec des métaux ou des composés métalliques, en tant qu'additif pour augmenter la stabilité de stockage de composants de résine et/ou de durcisseur d'une composition de résine réactionnelle à plusieurs composants, dans laquelle le composant durcisseur est à base de peroxyde et/ou d'amine et le composant de résine est à base de composés radicalairesplus durs et/ou à base d'époxyde.

2. Utilisation selon la revendication 1, dans laquelle l'acide silicique fonctionnalisé en surface est un composé de Formule générale (I) :
[O_{4/2}Si]ₐ[O_{3/2}SiCH₂CR³R⁴)ₘX]_{b}[O_{3/2}SiCH₂CR³R⁴)ₙY]_{c}[O_{3/2}SiV]_{d} (I)
dans laquelle X est choisi parmi NRR², NR[(CH₂)ₚNR¹]iR², SR, S(CH₂)ₑSR, S(CH₂)_{f}U, S[(CH₂)ⱼS]ₜR, S[(CH₂)ₑS]ₜ(CH₂)ₛZ, NRC(S)NR¹H, SCH₂CH(NHR)CO₂E, SCH₂CH(CO₂E)CH₂CO₂E, S(CH₂)ₗOR, S (CH₂)ᵤC(O)W, S(CH₂)ⱼNRC(S)NR¹H et OCH₂CH(OH)CH₂NR[(CH₂)ₚNR¹]ᵢR³, où U représente un noyau hétéroaromatique, Z représente SiO_{3/2} ou un noyau hétéroaromatique, E représente l'hydrogène, un alkyle en C₁ à C₁₀ ou un ion métallique M, et W représente OH, OR, OM ou NR [(CH₂)ₚNR¹]ᵢR²,
Y est choisi parmi NRR², NR[(CH₂)ₚNR¹]ᵢR², SR, S(CH₂)ₑSR, S(CH₂)_{f}U, S[(CH₂)ⱼS]ₜR ou S[(CH₂)ₑS]ₜ(CH₂)ₛZ,
R, R¹, R³ et R⁴ sont choisis indépendamment les uns des autres parmi l'hydrogène, un alkyle en C₁ à C₂₂, un aryle en C₁ à C₂₂ et un alkylaryle en C₁ à C₂₂, R² est choisi parmi l'hydrogène, un alkyle en C₁ à C₂₂ ou un C₂-C₁₀-alkyle-Si(O)_{3/2},
l, s, t et u représentent indépendamment les uns des autres des nombres entiers de 1 à 100,
i est un nombre entier de 1 à 10 000,
m et n représentent indépendamment l'un de l'autre un nombre entier de 1 à 100, et
e, f, j et p représentent indépendamment les uns des autres un nombre entier de 2 à 20,
V représente un groupe facultativement substitué qui est choisi parmi un alkyle en C₁ à C₂₂, un alcényle en C₂ à C₂2, un alcinyle en C₂ à C₂₂, un aryle, un alkylaryle en C₁ à C₂₂, un alkyle en C₁ à C₂₂ qui est substitué par un sulfide, un sulfoxyde, une sulfone, une amine, une polyalkylamine, une phosphine ou d'autres groupes contenant du phosphore, ou qui contient ces groupes en tant que partie de la chaîne d'hydrocarbure,
les valences libres des atomes d'oxygène du silicate sont saturées par
un ou plusieurs groupes qui sont choisis parmi un atome de silicium provenant d'autres composés de Formule générale (I), l'hydrogène, un groupe alkyle en C₁ à C₂₂ linéaire ou ramifié, un groupe terminal R⁵₃M¹O_{1/2}, un élément d'un pont de réticulation ou une chaîne R⁵_{q}M¹(OR⁶)_{g}O_{k/2} ou Al(OR⁶)₃₋ₕO_{h/2} ou R⁵Al(OR⁶)₂₋ᵣO_{r/2}, où M¹ représente Si ou Ti, R⁵ et R⁶ représentent, indépendamment l'un de l'autre, un groupe alkyle en C₁ à C₂₂ linéaire ou ramifié, un groupe aryle et un groupe alkylaryle en C₁ à C₂₂, k représente un nombre entier de 1 à 3, q représente 1 ou 2, et g représente un nombre entier de 0 à 2, g + k + q étant égal à 4, h représente un nombre entier de 1 à 3 et r représente 1 ou 2, ou un système de liaison oxométallique dans lequel le métal est le zirconium, le bore, le magnésium, le fer, le nickel ou un lanthanide,
a, b, c et d représentent des nombres entiers, de sorte que le rapport b:a est compris entre 0,00001 et 100 000 et a et b sont toujours supérieurs à 0, et lorsque c est supérieur à 0, le rapport c:a+b est compris entre 0,00001 et 100 000, et lorsque d est supérieur à zéro, le rapport d:a+b est compris entre 0,00001 et 100 000, si un groupe terminal et/ou un groupe de réticulation ou une chaîne polymère est utilisé, le rapport du groupe terminal, de l'agent de réticulation ou de la chaîne polymère sur a+b+c+d est de préférence compris entre 0 et 999:1, de manière préférée entre 0,001 et 999:1 et de manière particulièrement préférée entre 0,01 et 99:1.

3. Utilisation selon la revendication 2, dans laquelle l'acide silicique fonctionnalisé en surface est un composé de Formule générale (I), dans laquelle
X est choisi parmi NRR², NR[(CH₂)ₚNR¹]ᵢR², SR, S(CH₂)ₑSR, S[(CH₂)ᵢS]ₜR, S[(CH₂)ₑS]ₜ(CH₂)ₛZ, NRC(S)NR¹H, S(CH₂)ᵤC(O)W, S(CH₂)ⱼNRC(S)NR¹H et OCH₂CH(OH)CH₂NR[(CH₂)ₚ NR¹]ᵢR³, où Z représente SiO_{3/2} ou un noyau hétéroaromatique, et W représente NR[(CH₂)ₚNR¹]ᵢR²,
et lorsque c est supérieur à 0, Y est choisi parmi NRR², NR[(CH₂)ₚNR¹]ᵢR², SR, S(CH₂)ₑSR, S[(CH₂)ⱼS]ₜR ou S[(CH₂)ₑS]ₜ(CH₂)ₛZ,
R et R¹ sont choisis indépendamment l'un de l'autre parmi l'hydrogène, un alkyle en C₁ à C₁₀, un aryle en C₁ à C₂₂ et un alkylaryle en C₁ à C₂₂, R² est choisi parmi l'hydrogène, un alkyle en C₁ à C₂₂ ou un C₂-C₁₀-alkyle-Si(O)_{3/2}, R³ et R⁴ représentent l'hydrogène,
s, t et u représentent indépendamment les uns des autres des nombres entiers de 1 à 20,
i est un nombre entier de 1 à 10 000,
m et n représentent indépendamment l'un de l'autre un nombre entier de 1 à 10, et
e, j et p représentent indépendamment les uns des autres un entier de 2 à 20,
V représente un groupe facultativement substitué qui est choisi parmi un alkyle en C₁ à C₂₂, un alcényle en C₂ à C₂₂, un alcinyle en C₂ à C₂₂, un aryle, un alkylaryle en C₁ à C₂₂, un alkyle en C₁ à C₂₂ qui est substitué par un sulfide, un sulfoxyde, une sulfone, une amine ou une polyalkylamine, ou qui contient ces groupes en tant que partie de la chaîne d'hydrocarbure,
les valences libres des atomes d'oxygène du silicate sont saturées par
un ou plusieurs groupes qui sont choisis parmi un atome de silicium provenant d'autres composés de Formule générale (I), l'hydrogène, un groupe alkyle en C₁ à C12 linéaire ou ramifié et un groupe terminal R⁵₃SiO_{1/2}, un élément d'un pont de réticulation ou une chaîne R⁵_{q}Si(OR⁶)_{g}O_{k/2} ou Al(OR⁶)₃₋ₕO_{h/2} ou R⁵Al(OR⁶)₂₋ᵣO_{r/2}, où R⁵ et R⁶ représentent, indépendamment l'un de l'autre, un groupe alkyle en C₁ à C₆ linéaire ou ramifié, un groupe aryle et un groupe alkylaryle en C₁ à C₂₂,
a, b, c et d représentent des nombres entiers, de sorte que le rapport b:a est compris entre 0,00001 et 100 et a et b sont toujours supérieurs à 0, et lorsque c est supérieur à 0, le rapport c:a+b est compris entre 0,00001 et 100, et lorsque d est supérieur à zéro, le rapport d:a+b est compris entre 0,00001 et 100, si un groupe terminal et/ou un groupe de réticulation ou une chaîne polymère est utilisé, le rapport du groupe terminal, de l'agent de réticulation ou de la chaîne polymère sur a+b+c+d est de préférence compris entre 0 et 999:1, de manière préférée entre 0,001 et 999:1 et de manière particulièrement préférée entre 0,01 et 99:1.

4. Utilisation selon la revendication 3, dans laquelle l'acide silicique fonctionnalisé en surface est un composé de Formule générale (I), dans laquelle
X est choisi parmi NRR², NH[(CH₂)ₚNH]ᵢR², SR, S(CH₂)ₑSH, S[(CH₂)ᵢS]ₜH, S[(CH₂)ₑS]ₜ(CH₂)ₛZ, NHC(S)NR¹H, S(CH₂)ᵤC(O)W, S(CH₂)ⱼNRC(S)NR¹H et OCH₂CH(OH)CH₂NR[(CH₂)ₚNH]ᵢH, où Z représente SiO_{3/2} ou un noyau hétéroaromatique, et W représente NH[(CH₂)ₚNH]ᵢH,
et lorsque c est supérieur à 0, Y est choisi parmi NRR¹, NH[(CH₂)ₚNH]ᵢRH, SR, S(CH₂)ₑSH, S[(CH₂)ⱼS]ₜH ou S[(CH₂)ₑS]ₜ(CH₂)ₛZ,
R et R¹ sont choisis indépendamment l'un de l'autre parmi l'hydrogène, un alkyle en C₁ à C₁₀, un aryle en C₁ à C₂₂ et un alkylaryle en C₁ à C₂₂, R² est choisi parmi l'hydrogène, un alkyle en C₁ à C₂₂ ou un C₃-alkyle-Si(O)_{3/2}, R³ et R⁴ représentent l'hydrogène,
s, t et u représentent indépendamment les uns des autres des nombres entiers de 1 à 10,
i est un nombre entier de 1 à 10 000,
m et n représentent indépendamment l'un de l'autre des nombres entiers de 1 à 5, et
e, j, s et p représentent indépendamment les uns des autres des nombres entiers de 2 à 10,
V représente un groupe facultativement substitué qui est choisi parmi un alkyle en C₁ à C₁₂, un alcényle en C₂ à C₂₂, un alcinyle en C₂ à C₂₂, un aryle, un alkyle en C₁ à C₂₂, qui est substitué par un sulfide ou une amine, ou qui contient ces groupes en tant que partie de la chaîne d'hydrocarbure,
les valences libres des atomes d'oxygène du silicate sont saturées par
un ou plusieurs groupes qui sont choisis parmi un atome de silicium d'un autre composé de Formule générale (I), l'hydrogène, un groupe alkyle en C₁ à C₁₂ linéaire ou ramifié et un groupe terminal R⁵₃SiO_{1/2}, un élément d'un pont de réticulation ou une chaîne R⁵_{q}Si(OR⁶)_{g}O_{k/2} ou Al(OR⁶)₃₋ₕO_{h/2} ou R⁵Al(OR⁶)₂₋ᵣO_{r/2}, où R⁵ et R⁶ représentent, indépendamment l'un de l'autre, un groupe alkyle en C₁ à C₆ linéaire ou ramifié, un groupe aryle et un groupe alkylaryle en C₁ à C₂₂,
a, b, c et d représentent des nombres entiers, de sorte que le rapport b:a est compris entre 0,00001 et 10 et a et b sont toujours supérieurs à 0, et lorsque c est supérieur à 0, le rapport c:a+b est compris entre 0,00001 et 10, et lorsque d est supérieur à zéro, le rapport d:a+b est compris entre 0,00001 et 10, si un groupe terminal et/ou un groupe de réticulation ou une chaîne polymère est utilisé, le rapport du groupe terminal, de l'agent de réticulation ou de la chaîne polymère sur a+b+c+d est de préférence compris entre 0 et 99:1, de manière préférée entre 0,001 et 99:1 et de manière particulièrement préférée entre 0,01 et 9:1.

5. Utilisation selon la revendication 4, dans laquelle l'acide silicique fonctionnalisé en surface est un composé de Formule générale (I), dans laquelle
X est choisi parmi NR[(CH₂)ₚNR¹]ᵢR², S(CH₂)ₑSH, S(CH₂)ᵤC(O)W, S(CH₂)ⱼNRC(S)NR¹H, où W représente NH[(CH₂)ₚNH]ᵢH,
c et d sont égaux à 0,
R et R¹ sont choisis indépendamment l'un de l'autre parmi l'hydrogène ou un alkyle en C₁, R² représente l'hydrogène, R³ et R⁴ représentent l'hydrogène,
u et i représentent indépendamment l'un de l'autre 1 ou 2,
e, j et p représentent indépendamment les uns des autres 2 ou 3,
les valences libres des atomes d'oxygène du silicate sont saturées par
un ou plusieurs groupes qui sont choisis parmi un atome de silicium d'un autre composé de Formule générale (I), l' hydrogène, un groupe alkyle en C₁ à C₁₂ linéaire ou ramifié et un groupe terminal R⁵₃SiO_{1/2}, un élément d'un pont de réticulation ou une chaîne R⁵_{q}Si(OR⁶)_{g}O_{k/2} ou Al(OR⁶)₃₋ₕO_{h/2} ou R⁵Al(OR⁶)₂₋ᵣO_{r/2}, où R⁵ et R⁶ représentent, indépendamment l'un de l'autre, un groupe alkyle en C₁ à C₆ linéaire ou ramifié, un groupe aryle et un groupe alkylaryle en C₁ à C₂₂,
a et b représentent des nombres entiers, de sorte que le rapport b:a est compris entre 0,00001 et 10.

6. Utilisation selon l'une des revendications 1 à 5, dans laquelle l'acide silicique fonctionnalisé en surface est un acide silicique fonctionnalisé en surface et fabriqué par voie pyrogène.
